# EUROPÄISCHE PATENTSCHRIFT

(11) **EP 3 047 767 B1**
(45) Veröffentlichungstag und Bekanntmachung des Hinweises auf die Patenterteilung: **19.06.2019**
(21) Anmeldenummer: 15202876.7
(22) Anmeldetag: 29.12.2015
(51) Int. Cl.: A47J 31/42, A47J 42/00, A47J 42/50

(54) **BOHNENBEHÄLTER EINES KAFFEEAUTOMATEN**
BEAN CONTAINER OF A COFFEE MACHINE
TREMIE A GRAINS DE CAFE D'UNE MACHINE A CAFE

(30) Priorität: 26.01.2015 DE 102015201226
(43) Veröffentlichungstag der Anmeldung: 27.07.2016
(73) Patentinhaber: BSH Hausgeräte GmbH, 81739 München (DE)
(72) Erfinder: Zibret, Igor, 3327 Smartno ob Paki (SI); Ursej, Matjaz, 2382 Mislinja (SI); Lemez, Samo, 3327 Smartno ob Paki (SI)

(56) Entgegenhaltungen:
- DE-A1-102004 024 713
- DE-A1-102007 008 900
- DE-U1- 20 300 933
- DE-U1-202011 005 003

## Beschreibung

Die vorliegende Erfindung betrifft einen Bohnenbehälter eines Kaffeeautomaten mit einem integrierten und separaten Schacht für gemahlenen Kaffee gemäß dem Oberbegriff des Anspruchs 1. Die Erfindung betrifft außerdem einen Kaffeeautomaten mit einem derartigen Bohnenbehälter.

Gattungsgemäße Bohnenbehälter sind aus dem Stand der Technik bereits mannigfaltig bekannt und bieten die Möglichkeit, über ein in dem Kaffeeautomaten integriertes Mahlwerk aus den in dem Bohnenbehälter gelagerten Kaffeebohnen frisch gemahlenes Kaffeepulver einer Brühkammer zuzuführen. Über den in den Bohnenbehälter integrierten und separaten Schacht kann für einzelne Anwendungen auch anderes Kaffeepulver verwendet werden, beispielsweise entkoffeiniertes Kaffeepulver, was den großen Vorteil bietet, dass nicht zunächst sämtliche Bohnen aus dem Bohnenbehälter zuerst entfernt und anschließend entsprechend entkoffeinierte Bohnen eingefüllt werden müssen. Der Schacht für gemahlenen Kaffee besitzt dabei bodenseitig einen Ausgang und ist über diesen direkt mit einer Brühkammer verbunden, während ein Ausgang des Bohnenbehälters mit dem in dem Kaffeeautomaten integrierten Mahlwerk kommunizierend verbunden ist. Über den separaten Schacht kann somit gemahlenes Kaffeepulver, beispielsweise entkoffeiniertes Kaffeepulvers, unter Umgehung des Mahlwerks direkt der Brühkammer zugeführt und somit vergleichsweise einfach zwischendurch ein entkoffeinierter Kaffee gebrüht werden.

Da der bodenseitige Ausgang des separaten Schachts für gemahlenen Kaffee jedoch in Kontakt mit der Brühkammer steht, lässt sich nicht verhindern, dass Dampf aus der Brühkammer nach Abschluss des Brühvorgangs nach oben entweicht und über den Ausgang auch in den Schacht für gemahlenen Kaffee gelangt. Ist dort noch an den Wänden anhaftendes Kaffeepulver vorhanden, so wird dieses durch den aufsteigenden Dampf befeuchtet und verklebt mit den Wänden des Schachtes, wodurch der Schacht üblicherweise turnusmäßig aufwändig gereinigt werden muss. Durch das befeuchtete noch im Schacht an den Wänden anhaftende Kaffeepulver treten auch hygienische Mängel auf, die im ungünstigsten Fall sogar zu einer unerwünschten Schimmelbildung führen können.

Bohnenbehälter sind beispielsweise aus den Druckschriften DE 10 2004 024 713A1, DE 10 2007 008900 A1, DE 203 00 933 U1 und DE 20 2011 005003 U1 bekannt.

Die vorliegende Erfindung beschäftigt sich mit dem Problem, für einen Bohnenbehälter der gattungsgemäßen Art eine verbesserte oder zumindest eine alternative Ausführungsform anzugeben, die insbesondere die aus dem Stand der Technik bekannten Nachteile vermeidet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen bodenseitigen Ausgang eines Schachts für gemahlenen Kaffee in einem Bohnenbehälter zu verschließen, sofern kein gemahlenes Kaffeepulver direkt über den Schacht einer darunter angeordneten Brühkammer zugeführt werden soll. Durch das Verschließen des Ausgangs können ein unerwünschtes Aufsteigen von Dampf in den Schacht und die damit verbundenen und aus dem Stand der Technik bekannten Nachteile zuverlässig vermieden werden. Der erfindungsgemäße Bohnenbehälter besitzt dabei einen Raum zur Aufnahme von Kaffeebohnen und den zuvor erwähnten, integrierten und separaten Schacht für gemahlenen Kaffee, der bodenseitig einen Ausgang ausweist und der mit einem Deckel abgedeckt ist. Erfindungsgemäß weist nun dieser Deckel ein Verschlusselement auf, welches bei geschlossenem Deckel den bodenseitigen Ausgang verschließt und diesen lediglich bei geöffnetem Deckel freigibt. Hierdurch kann auf vergleichsweise einfache Art und Weise gewährleistet werden, dass der bodenseitige Ausgang des Schachts für gemahlenes Kaffeepulver stets verschlossen ist, sofern kein gemahlenes Kaffeepulver über den Schacht in die darunter angeordnete Brühkammer gelangen soll. Durch das Geschlossen halten des bodenseitigen Ausgangs des Schachtes kann ein unerwünschten Aufsteigen von Dampf beim Öffnen der Brühkammer in den Schacht vermieden werden, wodurch auch ein Verkleben von noch an den Schachtwänden anhaftendem Kaffeepulver und die damit einhergehenden Hygienemängel zuverlässig vermieden werden können. Durch die Integration des Verschlusselements in den Deckel kann darüber hinaus eine nicht nur konstruktiv äußerst einfache Lösung angeboten werden, sondern zudem auch eine kostengünstige.

Bei einer vorteilhaften Weiterbildung der erfindungsgemäßen Lösung ist das Verschlusselement als senkrecht zum Deckel abstehendes Schwert ausgebildet. Der Deckel ist dabei in der Art einer ebenen Platte ausgebildet und liegt in geschlossenem Zustand im Wesentlichen horizontal auf dem Schacht für gemahlenen Kaffee auf und deckt diesen ab. In dieser Stellung steht das als Schwert ausgebildete Verschlusselement senkrecht nach unten von dem Deckel ab und verschließt einen bodenseitigen, seitlichen Ausgang des Schachts. Beim Öffnen des Deckels schwenkt das als Schwert ausgebildete Verschlusselement einfach mit dem Deckel nach oben und gibt durch diesen Schwenkvorgang den bodenseitigen Ausgang frei, so dass nachfolgend in den Schacht eingefülltes Kaffeepulver bzw. Kaffeemehl einfach über den bodenseitigen Ausgang in die darunter angeordnete Brühkammer rutschen kann. "Bodenseitig" bedeutet in diesem Fall seitlich im Bereich des Bodens, so dass der Ausgang eigentlich in einer seitlichen Schachtwand des Schachts angeordnet ist. Die gegenüberliegende Schachtwand weist dabei üblicherweise einen in Richtung des bodenseitigen Ausgangs gekrümmten Verlauf auf und dient dabei als Rutsche für das eingefüllte Kaffeemehl.

Bei einer vorteilhaften Weiterbildung der erfindungsgemäßen Lösung ist das Verschlusselement einstückig mit dem Deckel ausgebildet, wobei der Deckel und das Verschlusselement zusätzlich als einstückiges Kunststoffspritzgussteil ausgebildet sein können. Ein derartiges einstückiges Kunststoffspritzgussteil bietet nicht nur die Möglichkeit, den Deckel samt Verschlusselement qualitativ hochwertig zu gestalten, sondern zugleich auch mit einem einzigen Kunststoffspritzgusswerkzeug äußerst kostengünstig herzustellen. Der Deckel selbst ist dabei schwenkbar am Bohnenbehälter bzw. am Schacht gelagert, beispielsweise über zwei seitlich vom Deckel abstehende Zapfen, die in entsprechenden Lageröffnungen am Schacht bzw. am Bohnenbehälter gelagert sind. Dabei ist es denkbar, dass der Bohnenbehälter selbst aus Kunststoff, insbesondere als Kunststoffspritzgussteil, ausgebildet und dadurch qualitativ hochwertig und zugleich kostengünstig hergestellt werden kann.

Bei einer vorteilhaften Weiterbildung der erfindungsgemäßen Lösung dient das Verschlusselement bei geöffnetem Deckel als Leitelement für einzufüllenden, gemahlenen Kaffee. Um das Einfüllen von gemahlenem Kaffee in den Schacht zu erleichtern, ist vorgesehen, dem Verschlusselement zugleich eine Leitfunktion zuzuweisen, so dass das Verschlusselement bei geschlossenem Deckel den Ausgang verschließt und bei geöffnetem Deckel das Einfüllen des gemahlenen Kaffeemehls erleichtert.

Die vorliegende Erfindung beruht weiter auf dem allgemeinen Gedanken, einen Kaffeeautomaten mit einem solchen, zuvor beschriebenen Bohnenbehälter auszustatten, wodurch die zuvor beschriebenen Vorteile des Bohnenbehälters auf den Kaffeeautomaten übertragen werden können. Der beschriebene Bohnenbehälter wirkt dabei mit dem Kaffeeautomaten derart zusammen, dass der Ausgang des Schachts für gemahlenen Kaffee mit einer Brühkammer des Kaffeeautomaten kommuniziert, so dass bei geöffnetem Ausgang gemahlener Kaffee direkt vom Schacht in die Brühkammer rutschen kann. Zugleich weist selbstverständlich der Bohnenbehälter einen zweiten Ausgang auf, über welchen Bohnen in ein darunter im Kaffeeautomaten angeordnetes Mahlwerk rutschen können. Auch bei dem erfindungsgemäßen Kaffeeautomaten bietet der erfindungsgemäße Deckel bzw. der erfindungsgemäße Bohnenbehälter den großen Vorteil, dass bei geschlossenem Deckel kein Dampf in unbeabsichtigter und unerwünschter Weise von der Brühkammer in den darüber angeordneten Schacht aufsteigen und dort beispielsweise Kaffeemehl an den Schachtwänden verkleben kann. Wird somit der Schacht nicht für die Zuführung von gemahlenem Kaffeemehl benötigt, ist dieser sowohl deckelseitig über den Deckel, als auch bodenseitig über das Verschlusselement komplett verschlossen.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine Ansicht auf einen erfindungsgemäßen Bohnenbehälter mit geschlossenem Deckel,
- Fig. 2: eine Darstellung wie in Fig. 1, jedoch mit geöffnetem Deckel.

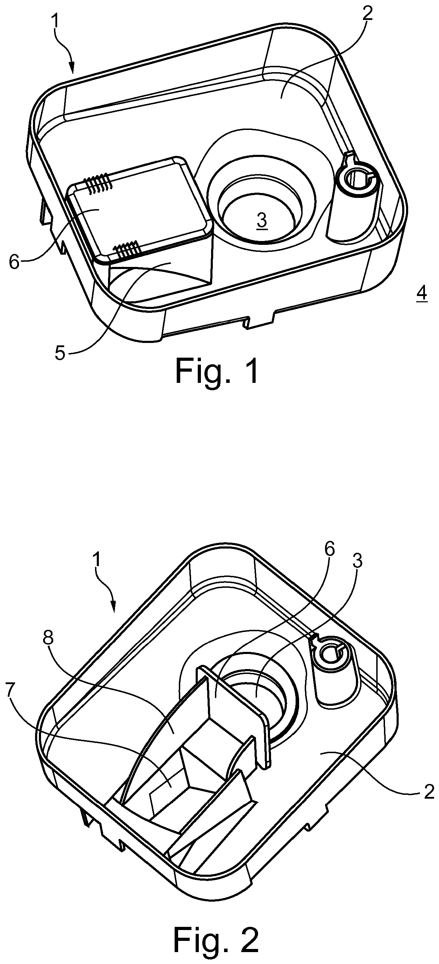

Entsprechend den Fig. 1 und 2, weist ein erfindungsgemäßer Bohnenbehälter 1 einen Raum 2 zur Aufnahme von Kaffeebohnen auf. Dieser Raum 2 weist eine bodenseitige Öffnung 3 auf, über welche Kaffeebohnen bei Bedarf einem darunter angeordneten Mahlwerk eines Kaffeeautomaten 4 zugeführt werden können. Der Kaffeeautomat 4 ist dabei in der Fig. 1 lediglich stark schematisiert dargestellt. Über die in dem Raum 2 des Bohnenbehälters 1 gelagerten und bei Bedarf dem Mahlwerk zugeführten Kaffeebohnen kann in dem Kaffeeautomaten 4 ein Kaffeegetränk mit frisch gemahlenem Kaffee hergestellt werden. Soll nun für einzelnen Anwendungsfälle ein anderer Kaffee, beispielsweise ein entkoffeinierter Kaffee, verwendet werden, so besitzt der erfindungsgemäße Bohnenbehälter 1 einen in diesen integrierten aber separaten Schacht 5, der mittels eines Deckels 6 abdeckbar ist, sofern über den Schacht 5 kein gemahlenes Kaffeepulver einer direkt darunter angeordneten Brühkammer zugeführt werden soll. Das über den Schacht 5 zugeführte Kaffeemehl/Kaffeepulver umgeht somit das Mahlwerk und muss deshalb in bereits gemahlener Form in den Schacht 5 eingefüllt werden und kann über diesen in die darunter angeordnete und nicht näher bezeichnete Brühkammer rutschen. Dadurch eröffnet sich die Möglichkeit, einzelne Portionen unterschiedlichen Kaffees herzustellen, ohne hierfür sämtliche Kaffeebohnen aus dem Raum 2 des Bohnenbehälters 1 entfernen zu müssen.

Ein Zuführen des in den Schacht 5 eingebrachten Kaffeepulvers zu der darunter angeordneten Brühkammer erfolgt über einen bodenseitigen Ausgang 7 (vgl. Fig. 2). Da der Ausgang 7 in zumindest indirektem Kontakt mit der Brühkammer 7 steht, tritt beim Öffnen der Brühkammer nach Abschluss eines Brühvorgangs Dampf aus der Brühkammer aus und gelangt über den Ausgang 7 in den Schacht 5. Ist dort noch an den Schachtwänden haftendes Kaffeemehl/Kaffeepulver vorhanden, so verklebt dieses mit den Schachtwänden und muss turnusmäßig aufwändig entfernt werden. Gleichzeitig kann durch ständig befeuchtetes Kaffeemehl/Kaffeepulver ein Hygienerisiko erzeugt werden, was zu vermeiden ist. Aus diesem Grund weist der erfindungsgemäße Deckel 6 ein Verschlusselement 8 (vgl. Fig. 2) auf, welches bei geschlossenem Deckel 6 (vgl. Fig. 1) den Ausgang 7 verschließt und bei geöffnetem Deckel (vgl. Fig. 2) den Ausgang 7 freigibt. Bei einem Nichtbenutzen des Schachts 5, das heißt bei geschlossenem Deckel 6, wird somit ein unerwünschtes Aufsteigen von Dampf aus der Brühkammer in den Schacht 5 verhindert, da die Öffnung 7 durch das Verschlusselement 8 verschlossen ist. Hierdurch kann insbesondere ein bislang turnusmäßig durchzuführender Reinigungsvorgang entfallen, da kein Dampf in den Schacht 5 gelangt und dort auch nicht zu einem Verkleben des noch an den Schachtwänden haftenden Kaffeepulvers führen kann.

Betrachtet man die Fig. 2, so kann man erkennen, dass das Verschlusselement 8 als senkrecht zum Deckel 6 abstehendes Schwert ausgebildet ist, welches bei einem Verschwenken des Deckels 6 in seine Schließstellung oder in Ausgang 7 gefahren wird. Das Verschlusselement 8 ist dabei vorzugsweise einstückig mit dem Deckel 6 ausgebildet, insbesondere kann sogar vorgesehen sein, dass der Deckel 6 und das Verschlusselement 8 als einstückiges Kunststoffspritzgussteil ausgebildet sind, wodurch die Herstellung des Deckels 6 samt Verschlusselement 8 nicht nur kostengünstig, sondern zugleich auch qualitativ hochwertig möglich ist.

Der Deckel 6 ist dabei schwenkbar am Bohnenbehälter 1 angeordnet, insbesondere am Schacht 5, der einen Bestandteil des Bohnenbehälters 1 darstellt. Selbstverständlich kann ebenso wie der Deckel 6 auch der gesamte Bohnenbehälter 1 aus Kunststoff, bevorzugt sogar als Kunststoffspritzgussteil ausgebildet sein.

Von besonderem Vorteil ist darüber hinaus, dass das Verschlusselement 8 bei geöffnetem Deckel 6 als Leitelement für einzufüllenden, gemahlenen Kaffee dient, wie dies beispielsweise gemäß der Fig. 2 gut zu erkennen ist. Das Verschlusselement 8 bildet in diesem Fall einen Rand für den Schacht 5, der das Einfüllen erleichtert, so dass die Gefahr, dass Kaffeemehl in unbeabsichtigter Weise in den Raum 2 gelangt, minimiert werden kann.

Ebenfalls von der Erfindung umfasst ist ein Kaffeeautomat 4, mit einem derartigen Bohnenbehälter 1, der beispielsweise abnehmbar am Kaffeeautomaten 4 angeordnet ist oder aber einen integralen Bestandteil desselben bildet. Der Ausgang 7 des Schachts 5 ist dabei kommunizierend mit einer darunter angeordneten und nicht näher bezeichneten Brühkammer des Kaffeeautomaten 4 verbunden, so dass bei geöffnetem Ausgang 7 der im Schacht 5 vorhandene, gemahlene Kaffee allein aufgrund der Schwerkraft in die darunter angeordnete Brühkammer rutschen kann. Der Ausgang 7 ist dabei in der Nähe eines Bodens des Schachts 5 angeordnet, insbesondere in einer seitlichen Schachtwand, wobei die gegenüberliegende Schachtwand in der Art einer bogenförmigen Rampe ausgestaltet ist, so dass in den Schacht 5 eingefülltes Kaffeemehl entlang dieser Rampe dem Ausgang 7 zugeführt wird.

Mit dem erfindungsgemäßen Verschlusselement 8 und dem erfindungsgemäßen Bohnenbehälter 1 lässt sich nicht nur die Hygiene bei Kaffeeautomaten 4 deutlich steigern, sondern auch Wartungsaufwand erheblich reduzieren. Die vorgeschlagene Lösung ist darüber hinaus konstruktiv äußerst einfach und kostengünstig realisierbar.

### Bezugszeichenliste

- 1: Bohnenbehälter
- 2: Raum
- 3: Öffnung
- 4: Kaffeeautomat
- 5: Schacht
- 6: Deckel
- 7: Ausgang
- 8: Verschlusselement

## Patentansprüche

1. Bohnenbehälter (1) eines Kaffeeautomaten (4) mit einem Raum (2) zur Aufnahme von Kaffeebohnen und mit einem integrierten und separaten Schacht (5) für gemahlenen Kaffee, der im Bereich eines Bodens einen Ausgang (7) aufweist, wobei der Schacht (5) mit einem Deckel (6) abgedeckt ist, **dadurch gekennzeichnet, dass** der Deckel (6) ein Verschlusselement (8) aufweist, welches bei geschlossenem Deckel (6) den Ausgang (7) verschließt und bei geöffnetem Deckel (6) den Ausgang (7) freigibt.

2. Bohnenbehälter nach Anspruch 1, **dadurch gekennzeichnet, dass** das Verschlusselement (8) als senkrecht zum Deckel (6) abstehendes Schwert ausgebildet ist.

3. Bohnenbehälter nach Anspruch 1 oder 2, **dadurch gekennzeichnet, dass** das Verschlusselement (8) einstückig mit dem Deckel (6) ausgebildet ist.

4. Bohnenbehälter nach einem der Ansprüche 1 bis 3, **dadurch gekennzeichnet, dass** der Deckel (6) und das Verschlusselement (8) als einstückiges Kunststoffspritzgussteil ausgebildet sind.

5. Bohnenbehälter nach einem der Ansprüche 1 bis 4, **dadurch gekennzeichnet, dass** der Deckel (6) schwenkbar am Bohnenbehälter (1), insbesondere am Schacht (5), gelagert ist.

6. Bohnenbehälter nach einem der Ansprüche 1 bis 5, **dadurch gekennzeichnet, dass** der Bohnenbehälter (1) aus Kunststoff, insbesondere als Kunststoffspritzgussteil, ausgebildet ist.

7. Bohnenbehälter nach einem der Ansprüche 1 bis 6, **dadurch gekennzeichnet, dass** das Verschlusselement (8) bei geöffnetem Deckel (6) als Leitelement für einzufüllenden gemahlenen Kaffee dient.

8. Kaffeeautomat (4) mit einem Bohnenbehälter (1) nach einem der Ansprüche 1 bis 7.

9. Kaffeeautomat nach Anspruch 8, **dadurch gekennzeichnet, dass** der Ausgang (7) des Schachts (5) für gemahlenen Kaffee mit einer Brühkammer kommuniziert, so dass bei geöffnetem Ausgang (7) gemahlener Kaffee vom Schacht (5) in die Brühkammer rutschen kann.

## Claims

1. Bean container (1) of a coffee machine (4) with a space (2) for receiving coffee beans and with an integrated and separate shaft (5) for ground coffee, which has an outlet (7) in the region of a base, wherein the shaft (5) is covered with a cover (6), **characterised in that** the cover (6) has a closing element (8), which closes the outlet (7) when the cover (6) is closed and releases the outlet (7) when the cover (6) is opened.

2. Bean container according to claim 1, **characterised in that** the closing element (8) is embodied as a swivel blade which projects at right angles to the cover (6).

3. Bean container according to claim 1 or 2, **characterised in that** the closing element (8) is embodied in one piece with the cover (6).

4. Bean container according to one of claims 1 to 3, **characterised in that** the cover (6) and the closing element (8) are embodied as a one-piece injection-moulded part.

5. Bean container according to one of claims 1 to 4, **characterised in that** the cover (6) is supported pivotably on the bean container (1), in particular on the shaft (5).

6. Bean container according to one of claims 1 to 5, **characterised in that** the bean container (1) is embodied from plastic, in particular as a plastic injection-moulded part.

7. Bean container according to one of claims 1 to 6, **characterised in that** when the cover (6) is opened, the closing element (8) serves as a guide element for adding ground coffee.

8. Coffee machine (4) with a bean container (1) according to one of claims 1 to 7.

9. Coffee machine according to claim 8, **characterised in that** the outlet (7) of the shaft (5) for ground coffee communicates with a brewing chamber so that when the outlet (7) is opened, ground coffee can slide from the shaft (5) into the brewing chamber.

## Revendications

1. Réservoir à grains (1) d'une machine à café automatique (4) avec un espace (2) pour l'accueil de grains de café et avec un entonnoir d'introduction (5) intégré et séparé pour le café moulu, lequel présente une sortie (7) dans la zone d'un fond, dans lequel l'entonnoir d'introduction (5) est couvert par un couvercle (6), **caractérisé en ce que** le couvercle (6) présente un élément d'obturation (8) qui, couvercle (6) fermé, obture la sortie (7) et qui, couvercle (6) ouvert, libère la sortie (7).

2. Réservoir à grains selon la revendication 1, **caractérisé en ce que** l'élément d'obturation (8) est exécuté sous la forme d'une épée perpendiculaire au couvercle (6).

3. Réservoir à grains selon la revendication 1 ou 2, **caractérisé en ce que** l'élément d'obturation (8) est exécuté en une seule pièce avec le couvercle (6).

4. Réservoir à grains selon l'une des revendications 1 à 3, **caractérisé en ce que** le couvercle (6) et l'élément d'obturation (8) sont exécutés sous la forme d'une seule pièce en plastique moulée par injection.

5. Réservoir à grains selon l'une des revendications 1 à 4, **caractérisé en ce que** le couvercle (6) est logé de façon pivotante sur le réservoir à grains (1), en particulier sur l'entonnoir d'introduction (5).

6. Réservoir à grains selon l'une des revendications 1 à 5, **caractérisé en ce que** le réservoir à grains (1) est exécuté en plastique, en particulier sous forme de pièce en plastique moulée par injection.

7. Réservoir à grains selon l'une des revendications 1 à 6, **caractérisé en ce que** l'élément d'obturation (8) sert, lorsque le couvercle (6) est ouvert, d'élément de guidage pour le café moulu à remplir.

8. Machine à café automatique (4) avec un réservoir à grains (1) selon l'une des revendications 1 à 7.

9. Machine à café automatique selon la revendication 8, **caractérisée en ce que** la sortie (7) de l'entonnoir d'introduction (5) pour le café moulu communique avec une chambre d'échaudage, de sorte que lorsque la sortie (7) est ouverte, du café moulu peut tomber de l'entonnoir d'introduction (5) dans la chambre d'échaudage.
